# EUROPEAN PATENT SPECIFICATION

(11) **EP 1 385 050 B1**
(45) Date of publication and mention of the grant of the patent: **26.03.2008**
(21) Application number: 03016377.8
(22) Date of filing: 19.07.2003
(51) Int. Cl.: G03C 5/17, G21K 4/00, C09K 11/08

(54) **Radiation image conversion panel and preparation method thereof**
Strahlungsbildwandler und Verfahren für dessen Darstellung
Panneau pour la conversion d'images et procédé pour sa préparation

(30) Priority: 25.07.2002 JP 2002216517; 14.03.2003 JP 2003069582
(43) Date of publication of application: 28.01.2004
(73) Proprietor: KONICA CORPORATION, Tokyo (JP)
(72) Inventor: Maezawa, Akihiro, Hino-shi, Tokyo, 191-8511 (JP); Mishina, Noriyuki, Hino-shi, Tokyo, 191-8511 (JP)
(74) Representative: Gille Hrabal Struck Neidlein Prop Roos

(56) References cited:
- EP-A- 0 253 348
- EP-A- 0 274 126
- EP-A- 0 654 795
- EP-A- 0 866 469
- EP-A- 1 113 292
- EP-A- 1 191 544
- WO-A-96/01479

## Description

### FIELD OF THE INVENTION

The present invention relates to a radiation image conversion panel and a method for preparing the same (hereinafter, also denoted simply as a preparation method).

### BACKGROUND OF THE INVENTION

Although so-called radiography employing silver halide photography is conventionally used to obtain radiographic images, there also has been developed a radiographic imaging method not using silver halide photographic material. Thus, an imaging method is disclosed, in which radiation that has been transmitted through an object is absorbed by phosphor, followed by exciting the phosphor with energy to cause the radiation energy accumulated in the phosphor to radiate in the form of fluorescence, and imaging is achieved by detecting the fluorescence.

Specifically, U.S. Patent No. 3,859,527 discloses a radiation image conversion method, in which a panel comprising on a support a photostimulable phosphor layer is employed using either or both visible light and infrared rays as the stimulating energy. There have been developed radiation image conversion methods using a photostimulable phosphor(hereinafter, also denoted simply as a stimulable phosphor) exhibiting enhanced luminance and high sensitivity, including, for example, a radiation image conversion method employing BaFX:Eu²⁺ type phosphor (X:Cl, Br, I), as described in JP-A No. 59-75200 (hereinafter, the term, JP-A refers to Japanese Patent Application Publication); a radiation image conversion method employing an alkali halide phosphor, as described in JP-A No. 61-72087; a radiation image conversion method employing an alkali halide phosphor containing, as coactivators, Tl⁺ and metals such as Ce³⁺, Sm³⁺, Eu³⁺, y³⁺,Ag⁺, Mg²⁺, Pb²⁺ or In³⁺, as described in JP-A Nos. 61-73786 and 61-73787.

Recently, a radiation image conversion panel exhibiting further enhanced sharpness has been desired in the field of diagnostic image analysis. Of these, an attempt in controlling the form of stimulable phosphor grains to enhance sensitivity and sharpness was made as a means for improving sharpness of radiographic images. For example, JP-A No. 61-142497 discloses a method of using a stimulable phosphor layer comprising a fine columnar block which has been formed by sedimentation of a stimulable phosphor on a support having fine protruded patterns; JP-A 62-39737 discloses a method of using a radiation image conversion panel having a stimulable phosphor layer having a pseudo-columnar form which has been formed by producing cracks on the layer surface side; JP-A 62-110200 proposes a method in which a stimulable phosphor layer having voids is formed by vapor deposition onto the upper surface of a support, followed by growing voids by subjecting the surface to a heating treatment to produce cracks.

JP-A No. 2-58000 proposed a radiation image conversion panel having a stimulable phosphor layer, in which long and thin columnar crystals were formed with an incline at a given angle toward the direction normal to the support.

In the foregoing attempts to control the form of a stimulable phosphor layer, it was intended to enhance image quality by allowing the phosphor layer to have a columnar crystal structure. It was supposed that the columnar form prevented traverse diffusion of stimulated emission light (or photo-stimulated luminescence), i.e., the light reached the support surface with repeating reflection at the interface of cracks (or columnar crystals), thereby leading to markedly enhanced sharpness of images formed by the stimulated luminescence.

Recently, a radiation image conversion panel using a stimulable phosphor containing an alkali halide such as CsBr as a basic substance and Eu as an activator, and the use of activator Eu leading to enhanced X-ray conversion efficiency, which had formerly not been achieved. However, Eu has properties of marked thermal diffusion and the vapor pressure being relatively high under vacuum, resulting in problems such that Eu is easily scattered and localizes in the basic substance. As a result, it becomes difficult to attain enhanced X-ray conversion efficiency by using Eu as an activator and practical use in the market has not yet achieved.

Further, in the technology of using rare earth elements such as Eu as an activator, it was difficult to achieve superior homogeneity of an activator in the formation of a vapor deposit layer under vacuum, only by controlling vapor pressure characteristics, as described in JP-A No. 2002-72381, 2002-20742 and 2002-6092. Specifically when a stimulable phosphor layer was formed by the vapor phase process (or vapor deposition), there were often conducted heating treatments, such as heating raw material, heating a support during vacuum deposition and annealing (for relaxation of substrate strain) after forming the layer, so that the existing state of the activator was varied, causing non-uniform presence of an activator in the layer. However, such heating treatments are indispensable to provide durability to the stimulable phosphor layer.

Further prior art references relating to the technical background of the present invention are as follows:
WO-A-96/01479 relates to a single sheet photostimulable phosphor screen which comprises a support, a continuous phosphor-containing layer and permanently and contiguously united therewith a grid structured phosphor-containing layer containing a phosphor different from the phosphor contained in said continuous phosphor-containing layer. The grid structured layer contains parallel rows of phosphor-containing stripes or dots. The thickness of the continuous layer and of the relief structure of the grid structured phosphor layer is in the range of from 0.05 to 0.5 mm. The continuous phosphor layer is prepared by ordinary coating methods and the grid structured phosphor layer is prepared by filling the grooves and pits of different materials or by using peel-off or wash-off techniques in combination with a phosphor resin binder. The support used in the photostimulable phosphor screen is made of a film forming organic resin, e.g. polyethylene terephthalate, but paper and cardboard supports optionally coated with a resin layer such as an alpha-olefinic resin are also useful. Further glass and metal supports are used in certain circumstances.
EP-A-0 866 469 relates to a radiation image storage panel comprising a support, an intermediate layer and a fluorescent layer comprising a binder and a stimulable phosphor dispersed therein. The thickness of the phosphor layer is within the range of from 10 to 1000 µm. Suitable support materials for the radiation image storage panel according to D2 are plastic films such as films of cellulose acetate, polyvinyl chloride, polyvinyl acetate, polyacrylonitrile, polystyrene, polyester, polyethylene terephthalate, polyethylene naphthalate, polyamide, polyimide, cellulose triacetate and polycarbonates; metal sheets such as aluminium foil and aluminium alloy foil; ordinary papers; baryta paper; resin-coated papers; pigment papers containing titanium dioxide or the like; and papers sized with polyvinyl alcohol or the like.
EP-A-0 654 795 relates to phosphor panels having binder compatible oxosulphur stabilizers. The phosphor panel has a support and a luminescent layer overlaying the support which includes phosphor crystals. Polymeric supports are used such as poly(ethylene) terephthalate.
EP-A-1 191 544 relates to a radiographic storage panel comprising a support having thereon a storage phosphor layer, whereby the panel is characterized as having a support comprising two or more different substrates adhered to each other. Useful materials for the substrates according are polymer materials such as poly(ethylene) terephthalate.
EP-A-0 253 348 refers to a radiation storage panel comprising a phosphor layer which comprises a stimulable phosphor. The support materials usable according to D5 are plastic films, metal foils, pigment papers and papers. As plastic film materials polyimide is mentioned in detail. Moreover, the support may comprise as additional compound light-absorbing materials such as carbon black.
EP-A-0 274 126 relates to a radiation storage panel with a fibrous conductive material to improve antistatic properties. The radiation image storage panel comprises a support made of plastic film or a paper material, a stimulable phosphor layer and optionally one or more other layer.
EP 1 113 292 A2 relates to a radiation image storage device composed of a fluorescent sheet which contains a phosphor which absorbs radiation energy and emits a light of ultraviolet or visible region. In detail, the radiation image storage device is composed of a radiation image storage panel on the front side to be irradiated with radiation and a fluorescent sheet on the back side. The radiation image storage panel itself is composed of a support, a fluorescent layer, a radiation image storage layer, and a protective layer. Thereby the support can be placed on a substrate such as a carbon fiber sheet or an aluminium sheet.

Accordingly, improvements are desired with respect to luminance, sharpness and homogeneity of the activator contained in the phosphor layer, as required as a radiation image conversion panel on the market.

### SUMMARY OF THE INVENTION

It is an object of the present invention to provide a radiation image conversion panel exhibiting superior homogeneity of an activator in a stimulable phosphor layer (hereinafter, also denoted simply as a phosphor layer) and enhanced luminance and sharpness, and a preparation method of the same.

The foregoing object can be accomplished by the following constitution:
1. A radiation image conversion panel comprising on a support at least one stimulable phosphor layer comprising a stimulable phosphor, wherein the stimulable phosphor layer is a layer of vapor-deposited stimulable phosphor having a thickness of 50 µm to 20 mm, and the support is comprised of polyimide a carbon fiber plate and polyimide in that order.
2. A method of preparing a radiation image conversion panel comprising on a support a stimulable phosphor layer, the method comprising:
   depositing a stimulable phosphor on the support by vapor deposition to form the stimulable phosphor layer,
wherein the support is comprised of polyimide, a carbon fiber plate, and polyimide in that order.

### BRIEF EXPLANATION OF THE DRAWING

Fig. 1 illustrates a stimulable phosphor layer having columnar crystals formed on the support by a process of vapor deposition (or vapor phase growth). 9LEA
Fig. 2 illustrates the mode of forming a stimulable phosphor layer on a support by the vapor deposition method.
Fig. 3 shows an example of obtaining a transmission-type radiation image using a radiation image conversion panel according to the invention.
Fig. 4 illustrates formation of a stimulable phosphor layer by vapor deposition.

### DETAILED DESCRIPTION OF THE INVENTION

One aspect of this invention is directed to a radiation image conversion panel comprising on a support a stimulable phosphor layer. The stimulable phosphor layer is a layer of a layer of vapor-deposited stimulable phosphor, that is, a stimulable phosphor is deposited on the support (or substrate) by the vapor deposition process. The support used in this invention is comprised of polyimide, a carbon fiber plate, and polyimide in that order. The use of a polymer material as a support results in the support (or substrate) being uniformly heated and uniformly dissipating the heat during formation of columnar crystals, leading to columnar crystals having a small top diameter and a relatively short height.

To perform vapor deposition with maintaining tensile strength of the support, the glass transition temperature of the polymer material is preferably 150 to 350 °C in regard to heat resistance.

In the process of forming the stimulable phosphor layer on the support by vapor deposition so as to have a layer thickness of 50 to 20 mm, the support is arranged preferably in a fan form (roof-form) to perform vapor deposition. Thus, to avoid thermal influence and achieve uniform heat distribution, a dome-form substrate holder is provided so that vapor streams form an outgoing angle of at least 20° with respect to the evaporation source, thereby allowing an activator to be homogeneously deposited in the phosphor layer.

Allowing an activator to be homogeneously deposited in the phosphor layer means that the activator content of the support side of the phosphor layer is substantially the same as that of the surface side of the phosphor layer. Specifically, the activator content of the support side coincides with that of the surface side preferably within +10%. For example, a sample obtained by shaving off a ca. 500 µm thick phosphor layer to a depth of 100 µm from the surface side, and that from the support side are each dissolved in water to form an aqueous solution. The respective aqueous solutions are subjected to ICP emission spectrometry to determine the activator content.

In the radiation image conversion panel according to this invention, the support is comprised of three layers. Thus, it is intended to use a support comprising plural layers to obtain a support exhibiting a relatively low X-ray absorption and having superior flatness, and it is more preferred to form plural layers using a film sheet exhibiting an X-ray absorbance at 80 kVp of less than 10%.

In this invention, the support is comprised of plural layers containing a carbon fiber plate, which is obtained by laminating thin film sheets achieving a precise plane flatness at the time of deposition together with a rigid carbon fiber plate. As a thin film sheet polyimide is employed as plastic material.

The support comprises polyimide, carbon fiber plate and polyimide in that order, thereby resulting in enhanced advantages of this invention.

Polyimide film, for example, Mictron Film or Capton Film (available from Toray Co.) can be employed, which is laminated onto a carbon fiber plate and molded to prepare a support in the following manner. Thus, polyimide sheets, which were previously coated with an adhesive layer or bonded with a adhesive sheet are laminated onto the carbon fiber plate. Alternatively, a carbon fiber plate impregnated with epoxy resin or bismaleimide resin is sandwiched between polyimide sheets and then molded using a molding machine at a temperature of 150 to 300 °C and a pressure of 9.8x10⁵ to 6.9x10⁶ Pa over a period of 15 min. to 3 hr. The three-layered support of polyimide/carbon resin fiber plate/polyimide used in Examples, described later was prepared according to the latter method.

As polyimide sheet, a thickness of at least 50 µm is preferred to reduce protrusions on the support surface and a thickness up to 200 µm is preferred in terms of handling. As carbon fiber plate, a thickness of at least 0.1 mm is preferred in terms of rigidity and a thickness up to 5 mm is preferred in X-ray absorption.

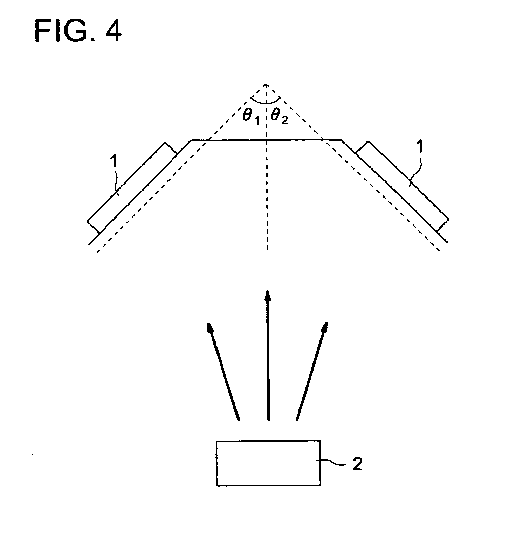

Fig. 4 illustrates vapor deposition on a substrate (polymer material) according to this invention. The roof-form angle, which is angle (θ₁ + θ₂), as shown in Fig. 5, is preferably 20° to 70°. An angle of less than 20° forms a narrow opening over the evaporation source, lowering vapor deposition efficiency. An angle of more than 70° spreads an opening over the evaporation source, whereby the deposition efficiency is further enhanced but the heat distribution becomes worse, resulting in an non-homogeneous activator in the phosphor layer. Thus, the foregoing angle is preferably 20° ≤ (θ₁ + θ₂) ≤ 70°, provided that θ₁ and θ₂ are not zero at the same time.

As shown in Fig. 4, the substrates 1 are arranged in a fan form (or roof form) toward the evaporation source 2. Specifically, the substrate is not provided right above the evaporation source but the substrates 1 are arranged at symmetrical angles of 20° (as shown in Fig. 5, θ₁ = 20° and θ₂ = 20°), thereby forming a phosphor layer homogeneously containing an activator.

The upper portion of the evaporation source preferably has a mesh or perforated structure.

Accordingly, vapor deposition in this invention is conducted preferably under the condition at a vacuum pressure of 1.33 to 1.33x10⁻³ Pa and a temperature of 20 to 70 °C (more preferably, 35 to 45 °C).

The support used in the radiation image conversion panel relating to this invention is comprised of polyimide, a carbon fiber plate, and polyimide in that order.

In the radiation image conversion panel according to this invention, the support is comprised of at least three layers. Thus, it is preferred to use a support comprising plural layers to obtain a support exhibiting a relatively low X-ray absorption and having superior flatness, and it is more preferred to form plural layers using a film sheet exhibiting an X-ray absorbance at 80 kVp of less than 10%.

In this invention, the support is preferably comprised of plural layers containing a carbon fiber plate, which is obtained by laminating thin film sheets achieving a precise plane flatness at the time of deposition together with a rigid carbon fiber plate. As a thin film sheet can be employed polyimide as plastic material.

The support comprises polyimide, carbon fiber plate and polyimide in that order, thereby resulting in enhanced advantages of this invention.

Polyimide film, for example, Mictron Film or Capton Film (available from Toray Co.) can be employed, which is laminated onto a carbon fiber plate and molded to prepare a support in the following manner. Thus, polyimide sheets, which were previously coated with an adhesive layer or bonded with a adhesive sheet are laminated onto the carbon fiber plate. Alternatively, a carbon fiber plate impregnated with epoxy resin or bismaleimide resin is sandwiched between polyimide sheets and then molded using a molding machine at a temperature of 150 to 300 °C and a pressure of 9.8x10⁵ to 6.9x10⁶ Pa over a period of 15 min. to 3 hr. The three-layered support of polyimide/carbon resin fiber plate/polyimide used in Examples, described later was prepared according to the latter method.

As polyimide sheet, a thickness of at least 50 µm is intended to be used in order to reduce protrusions on the support surface and a thickness up to 200 µm is intended to be used in terms of handling. As carbon fiber plate, a thickness of at least 0.1 mm is preferred in terms of rigidity and a thickness up to 5 mm is preferred in X-ray absorption.

The support may be smooth-surfaced, or it may be matted in order to enhance adhesion of the support to the stimulable phosphor layer. To enhance adhesion between the support and stimulable phosphor layer, the surface of the support may optionally be provided with an adhesion promoting layer in advance. A thickness of the support, depending on material, is usually 80 to 2000 µm, and preferably 80 to 1000 µm in terms of handling.

The stimulable phosphor used in this invention preferably is one represented by the following formula (1):

formula (1) M¹X·aM²X'·bM³X":eA

wherein M¹ is at least one alkali metal atom selected from the group consisting of Li, Na, K, Rb and Cs; M² is at least one divalent metal atom selected from the group consisting of Be, Mg, Ca, Sr, Ba, Zn, Cd, Cu and Ni; M³ is at least one trivalent metal atom selected from the group consisting of Sc, Y, La, Ce, Pr, Nd, Pm, Sm, Eu, Gd, Tb, Dy, Ho, Er, Tm, Yb, Lu, Al, Ga and In; X, X' and X" are each a halogen atom selected from the group consisting of F, Cl, Br and I; A is a metal atom selected from the group consisting of Eu, Tb, In, Ce, Tm, Dy, Pr, Ho, Nd, Yb, Er, Gd, Lu, Sm, Y, Tl, Na, Ag, Cu and Mg; a, b and e are each 0≤a <0.5, 0≤b<0.5 and 0<e≤0.2.

In the formula (1), M¹ is at least one alkali metal atom selected from the group consisting of Li, Na, K, Rb and Cs, preferably at least one alkali metal atom selected from Rb and Cs atoms, and more preferably Cs atom.

M² represents a divalent metal selected from the group consisting of Be, Mg, Ca, Sr, Ba, Zn, Cd, Cu and Ni. Of these, a divalent metal selected from the group consisting of Be, Mg, Ca, Sr, and Ba is preferred.

M³ represents a trivalent metal selected from the group consisting of Sc, Y, La, Ce, Pr, Nd, Pm, Sm, Eu, Gd, Tb, Dy, Ho, Er, Tm, Yb, Lu, Al, Ga. Of these, a trivalent metal selected from the group consisting of Y, Ce, Sm, Eu, Al, Gd, Lu, Ga and In is preferred.

A represents a metal selected from the group consisting of Eu, Tb, In, Ce, Tm, Dy, Pr, Ho, Nd, Yb, Er, Gd, Lu, Sm, Y, Tl, Na, Ag, Cu and Mg.

X, X' and X" are each at least one halogen atom selected from the group consisting of F, Cl, Br and I, preferably at least one halogen atom selected from F, Cl and Br, and more preferably Br in terms of enhancing stimulated emission of a stimulable phosphor.

The foregoing stimulable phosphor preferably is one represented by the following formula (2):

formula (2) M¹X:eA

wherein M¹, X, A and e are each the same as defined in the foregoing formula (1).

In the formula (1), "a" is 0 ≤ a <0.5 and preferably 0 ≤ a <0.01; "b" is 0 ≤ b <0.5, and preferably 0 ≤ b ≤ 0.01; "e" is 0 < e ≤ 0.2, and preferably 0 < e ≤0.1.

The stimulable phosphor represented by formula (1) can be prepared, for example, in the following manner.

First, an acid (HI, HBr, HCl or HF) is added to a carbonate so as to form a composition of a phosphor raw material described below and after mixed with stirring, the mixture is filtered at a point of neutralization, and the filtrate was evaporated to obtain crystals having the following composition.

As phosphor raw material, at least one compound selected from each of the following groups (a) and (b), and a compound containing a metal atom selected from the following group (c) are used:
(a) NaF, NaCl, NaBr, Nal, KF, KCl, KBr, KI, RbF, RBCl, RbBr, RbI, CsF, CsCl, CsBr, and CsI;
(b) MgF₂, MgCl₂, MgBr₂, MgI₂, CaF₂, CaCl₂, CaBr₂, CaI₂, SrF₂, SrCl₂, SrBr₂, SrI₂, BaF₂, BaCl₂, BaBr₂, BaBr₂·2H₂O, BaI₂, ZnF₂, ZnCl₂, ZnBr₂, ZnI₂, CdF₂, CdCl₂, CdBr₂, CdI₂, CuF₂, CuCl₂, CuBr₂, CuI₂, NiF₂, NiCl₂, NiBr₂ and NiI₂;
(c) Eu, Tb, In, Cs, Ce, Tm, Dy, Pr, Ho, Nd, Yb, Er, Gd, Lu, Sm, Y, Tl, Na, Ag, Cu and Mg.
   As activator raw material, a compound containing a metal atom selected from the following group (d) is used:
(d) Eu, Tb, In, Cs, Ce, Tm, Dy, Pr, Ho, Nd, Yb, Er, Gd, Lu, Sm, Y, Tl, Na, Ag, Cu and Mg.

Phosphor raw materials, which have been selected from the foregoing (a) to (d) so as to have mixing composition meeting the numerical range, as defined in this invention are weighed and dissolved in pure water. In this regard, there may be conducted sufficient mixing using a mortar, ball mill or mixer mill. Then, a prescribed amount of an acid is added to adjust a pH value (C) of the thus obtained solution so as to fall within the range of 0 < C < 7, and then any water is vaporized.

Further, the obtained raw material mixture is charged into a heat-resistant vessel such as a silica port, an alumina crucible or a silica crucible and then placed in an electric furnace to be calcined. The calcination temperature preferably is 500 to 1000 °C. The calcination time, depending on a charging amount of raw materials, calcination temperature and the like, preferably is 0.5 to 6 hrs. As a calcinations atmosphere is employed a weakly reducible atmosphere such as a nitrogen gas atmosphere containing a small amount of hydrogen gas or a carbon dioxide atmosphere containing carbon monoxide, a nitrogen gas atmosphere, a neutral atmosphere such as an argon gas atmosphere, or a trace amount of oxygen-introduced weakly oxidizing atmosphere.

After completion of calcination under the foregoing condition, calcined material is taken out of the electric furnace and subjected to pulverization. Thereafter, powdery calcined material may again be charged into a heat resistant vessel and then placed in an electric furnace to be calcined under the foregoing condition to further enhance emission luminance of the phosphor. When the calcined material is allowed to cool from calcination temperature to room temperature, the intended phosphor can be obtained by being taken out the calcined material from an electric furnace and allowing it to stand in an aerial atmosphere. In this regard, the calcined material may be cooled in the same atmosphere as in the calcination, such as a weakly reducing atmosphere or neutral atmosphere. Alternatively, the calcined material is moved from a heating section to a cooling section within the electric furnace, followed by being rapidly cooled in a weakly reducing atmosphere, neutral atmosphere or weakly oxidizing atmosphere, thereby leading to further enhanced stimulated emission luminance of the phosphor.

The stimulable phosphor layer relating to this invention is a layer of vapor deposited stimulable phosphor and is formed by vapor deposition (or vapor-phase deposition process). The phosphor layer being formed by a process of vapor deposition means that the phosphor layer is formed by a process comprising depositing a stimulable phosphor on the support in the vapor phase to form the stimulable phosphor layer. Thus, the stimulable phosphor is deposited on the support in the vapor phase deposition process to form the phosphor layer (having a thickness of 50 µm to 20 mm).

A vacuum evaporation method, a sputter deposition method, a CVD (chemical vapor deposition) method, ion plating method and other methods have been employed to deposit the stimulable phosphor on the support to form a stimulable phosphor layer.

The foregoing methods are conducted, for example, in the manner described below.

Vacuum evaporation is conducted in such a manner that after placing a support in an evaporation apparatus, the inside of the apparatus is evacuated to a vacuum degree of 1.333x10⁻⁴ Pa and subsequently, at least a stimulable phosphor is evaporated with heating by the resistance heating method or electron-beam method to cause the phosphor to be deposited at a slant on the surface of the support to a desired thickness. As a result, a stimulable phosphor layer containing no binder is formed, provided that the foregoing evaporation stage may be divided into plural times to form the stimulable phosphor layer. In this evaporation stage, plural resistance heaters or electron beams may be used to perform vacuum evaporation. Alternatively, raw material of a stimulable phosphor is evaporated using plural resistance heaters or electron beams and the intended stimulable phosphor is synthesized on the support, simultaneously forming a stimulable phosphor layer. After completion of vapor evaporation, a radiation image conversion panel of this invention can be prepared by optionally providing a protective layer on the opposite side of the stimulable phosphor layer to the support. Vacuum evaporation may be conducted while cooling or heating the substrate to be deposited thereon. After completion of vacuum evaporation, the stimulable phosphor layer may be subjected to a heating treatment. In vapor evaporation, a gas such as O₂ or H₂ may optionally be introduced to perform reactive vapor evaporation.

Sputter deposition is conducted in such a manner that after setting a support in a sputtering apparatus, the inside of the apparatus is evacuated to a vacuum level of 1.333x10⁻⁴ Pa and then inert gas used for sputtering such as Ar and Ne is introduced therein at a gas pressure of ca. 1.333x10⁻¹ Pa, subsequently, sputtering is carried out with targetting the stimulable phosphor to cause the phosphor to be deposited on the slanted surface of the support so as to have a desired thickness. Similarly to the vacuum evaporation, various treatments may be applied.

Further, there are also applicable the CVD method and ion plating method.

The growth rate of a stimulable phosphor layer in the vapor deposition preferably is 0.05 to 300 µm/min. A growth rate of less than 0.05 µm/min results in lowered productivity of the radiation image conversion panel of this invention and is not preferable. In the case of a growth rate of more than 300 µm/min, it is difficult to control the growth rate and is not unsuitable.

A radiation image conversion panel which has been prepared by the vapor evaporation method or sputter deposition method contains no binder, leading to increased filling density of the stimulable phosphor layer and thereby a radiation image conversion panel with enhanced sensitivity and sharpness can be obtained.

A thickness of the stimulable phosphor layer, depending on the intended use of the radiation image conversion panel and the kind of stimulable phosphor, preferably is 50 µm to 1 mm, more preferably 50 to 300 µm, still more preferably 100 to 300 µm, and optimally 150 to 300 µm.

In the formation of a stimulable phosphor layer by the vapor deposition, a support on which the stimulable phosphor layer is to be formed, is preferably heated at a temperature of 100 °C or higher, more preferably 150 °C or higher, and still more preferably 150 to 400 °C.

The reflectance of a stimulable phosphor layer preferably is not less than 20%, more preferably not less than 30%, and still more preferably not less than 40%, with an upper limit of 100%.

Further, spacing between columnar crystals may be filled with a filler such as a binder to strengthen the phosphor layer. Furthermore, material exhibiting relatively high light absorbance or high reflectance may be used as filler. The use thereof prevents lateral diffusion of stimulating light entering the phosphor layer, in addition to the foregoing strengthening effect.

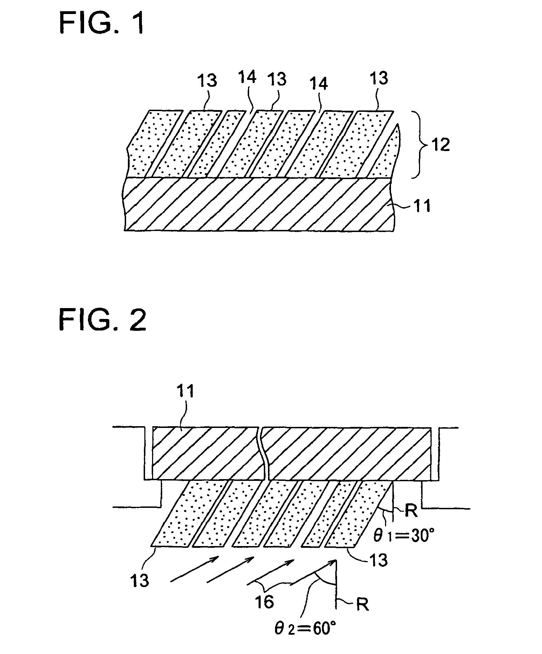

Next, formation of the stimulable phosphor of this invention will be described based on Figs. 1 and 2. Fig. 1 exemplarily illustrates a stimulable phosphor layer having columnar crystals formed on the support. In the Fig. 1, the numeral 11 designates a support, the numeral 12, a stimulable phosphor layer, and numeral 13, columnar crystals forming the stimulable phosphor layer. The numeral 14 indicates spacing between columnar crystals.

Fig. 2 illustrates the mode of forming a stimulable phosphor layer on a support by the vacuum evaporation method, in which vapor streams (16) of a stimulable phosphor are introduced at an incident angle θ₂ (in the Figure, 60°) to the line (R) normal to the support surface to form columnar crystals on the support, at an angle of θ₁ (in the Figure, 30°, empirically, about a half of the incident angle).

The stimulable phosphor layer formed on the support contains no binder, leading to superior directionality and enhanced directionality of stimulating light and stimulated luminescence and enabling formation of a thicker phosphor layer, as compared to radiation image conversion panel having a dispersion-type stimulable phosphor layer, in which a stimulable phosphor is dispersed in a binder. Moreover, reduced scattering of stimulating light in the stimulable phosphor layer results in enhanced sharpness.

Further, spacing between columnar crystals may be filled with a filler such as a binder to strengthen the phosphor layer. Furthermore, material exhibiting relatively high light absorbance or high reflectance may be used as filler. The use thereof prevents lateral diffusion of stimulating light entering the phosphor layer, in addition to the foregoing strengthening effect. Material exhibiting high reflectance refers to one exhibiting a high reflectance with respect to stimulating light (500 to 900 nm, specifically 600 to 800 nm), including metals such as aluminum, magnesium, silver and indium, white pigments and colorants ranging green to red.

White pigments can also reflect stimulating light. Examples thereof include TiO₂ (anatase type, rutile type), MgO, PbCO₃, Pb(OH)₂, BaSO₄, Al₂O₃, M (II) FX [in which M(II) is at least one of Ba, Sr and Ca, X is at least one of Cl and Br], CaCO₃, ZnO, Sb₂O₃, SiO₂, ZrO₂, lithopone (BaSO₄·ZnS), magnesium silicate, basic lead silisulfate, and aluminum silicate. These white pigments exhibit high covering power and have a refractive index high, whereby stimulated luminescence is easily scattered through reflection or refraction, leading to enhanced sensitivity of the radiation image conversion panel.

Examples of material exhibiting high light absorbance include carbon, chromium oxide, nickel oxide, iron oxide, and blue colorants. Of these, carbon absorbs stimulated luminescence.

Colorants may be any organic or inorganic colorants. Examples of organic colorants include Zapon Fastblue 3G (produced by Hoechst A.G.), Estrol Brillblue N-3RL (produced by Sumitomo Chemical Ind. Co.Ltd.), D6CBlue No. 1 (produced by National Aniline Co.), Spirit Blue (produced by HODOGAYA KAGAKU Co., Ltd.), Oilblue No. 603 (produced by Orient Co., Ltd.), Kiton Blue A (produced by Chiba Geigy Co.), Aisen Catironblue GLH (produced by HODOGAYA KAGAKU Co., Ltd.), Lakeblue AFH (produced by KYOWA SANGYO Co., Ltd.), Primocyanine 6GX (produced by INAHATA SANGYO o. Ltd.), Briilacid Green 6BH (produced by HODOGAYA KAGAKU Co., Ltd.), Cyanblue BNRCS (produced by Toyo Ink Co., Ltd.), and Lyonoyl Blue SL (produced by Toyo Ink Co., Ltd.). There are also cited organic metal complex colorants such as Color Index 24411, 23160, 74180, 74200, 22800, 23154, 23155, 24401, 14830, 15050, 15760, 15707, 17941, 74220, 13425, 13361, 13420, 11836, 74140, 74380, 74350 and 74460. Examples of inorganic colorants include ultramarine, cobalt blue, celureun blue, chromium oxide, and TiO₂-ZnO-NiO type pigments.

The stimulable phosphor layer may be provided thereon with a protective layer. The protective layer may be formed by coating a coating composition for the protective layer on the stimulable phosphor layer or the protective layer which was previously prepared may be adhered to the support. Alternatively, a procedure of forming a stimulable phosphor layer on the protective layer which was previously prepared is also applicable. Materials used for the protective layer include those which are usually used for protective layers. Examples thereof include cellulose acetate, nitrocellulose, polymethyl methacrylate, polyvinyl butyral, polyvinyl formal, polycarbonate, polyester, polyethylene terephthalate, polyethylene, polyvinylidene chloride, nylon, polytetrafluoroethylene, polytrifluoroethylene, copolymer of terafluoroethylene and hexafluoropropylene, copolymer of vinylidene chloride and vinyl chloride, and copolymer of vinylidene chloride and acrylonitrile. Further, a transparent glass substrate may be used as a support. Furthermore, inorganic material such as SiC, SiO₂, SiN, and Al₂O₃ may be allowed to deposit by means of the vacuum evaporation or sputtering method to form the protective layer. The thickness of a protective layer is preferably 0.1 to 2,000 µm.

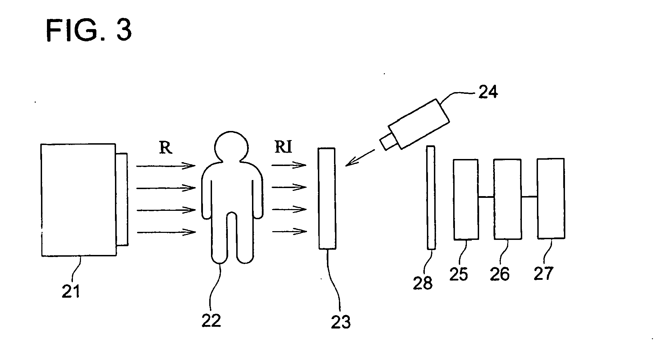

Fig. 3 illustrates a constitution of a radiation image conversion panel of this invention. In Fig. 3, the numeral 21 designates a radiation generating apparatus, 22 designates an object, 23 designates a radiation image conversion panel having a visible- or infrared-stimulable phosphor layer, 24 designates a stimulating light source to cause a latent image stored in the radiation image conversion panel (23) to be emitted as stimulated luminescence, 25 designates a photoelectric conversion apparatus to detect the stimulated luminescence emitted from the radiation image conversion panel (23), 26 designates an image reproduction apparatus to reproduce photoelectric conversion signals detected in the photoelectric conversion apparatus (25) in the form of an image, 27 designates a display apparatus to display reproduced images, and 28 designates a filter for reflected light from a light source (24) to allow only light emitted from the radiation image conversion panel (23) to pass therethrough. Fig. 3 shows an example of obtaining a transmission-type radiation image, and in cases where the object (22) itself radiates radiation, a radiation generation apparatus (21) may not be required. An apparatus subsequent to the photoelectric conversion (25) apparatus may be any one that is capable of reproducing light information from the radiation image conversion panel (23), in any image form.

As shown in Fig. 3, when the object (22) is arranged between the radiation generation apparatus (21) and the radiation image conversion panel (23), and exposed to radiation (R), the radiation (R) transmits the respective portions of the object (22) in accordance with radiation transmittance thereof and the resulting transmission image (RI), i.e., an image having different radiation intensities enters the radiation image conversion panel (23). The thus entered transmission image (RI) is absorbed in a stimulable phosphor layer of the radiation image conversion panel (23), in which electrons and/or holes are generated in proportion to the dose of the absorbed radiation and accumulated at a trap level of the stimulable phosphor to form a latent image accumulating energies of the radiation transmission image. Subsequently, the latent image is excited with light energy to form an actual image, i.e., the stimulated phosphor layer is irradiated with the light source (24) irradiating visible or infrared light to eject the electrons and/or holes accumulated on the trap level to emit the accumulated energy in the form of stimulated luminescence. The intensity of the emitted luminescence is proportional to the number of accumulated electrons and/or holes, that is, energy of the radiation absorbed in the stimulable phosphor of the radiation image conversion panel (23). The thus obtained light signals are converted to electric signals by the photoelectric conversion (25) apparatus such as a photomultiplier, which are reproduced as an image in image processor (26), displaying the image in image display apparatus (27). As the image processor (26), it is effective to employ one which not only reproduces the electric signals as the image signal but one which can also conduct image processing, computation, memory and storage of the image.

The stimulated luminescence emitted from the stimulable phosphor layer, having a spectral distribution in the lower wavelength region is preferable, based on the reason that the stimulated luminescence emitted from the stimulable phosphor layer is required to be separated from the reflected stimulating light and photoelectric converters to receive the luminescence emitted from the stimulable phosphor layer, in general, are provided with a sensor having higher sensitivity to light energy of 600 nm or less. Emission of stimulable phosphors relating to the invention falls within the wavelength region of 300 to 500 nm and the stimulating light wavelength is 500 to 900 nm, satisfying the foregoing conditions. Further, along with a recent trend of downsizing diagnostic apparatuses, semiconductor lasers which exhibit a higher output and are capable of being further down-sized are preferably employed for use in reading images of the radiation image conversion panel. The semiconductor laser has a wavelength of 680 nm and the stimulable phosphor used in the radiation image conversion panel of the invention exhibits extremely superior sharpness when using a stimulating light of 680 nm. Thus, the stimulable phosphors relating to the invention emit luminescence having a main peak at 500 nm or less, which is easily separable from the stimulating light and compatible with spectral sensitivity of the receiver, leading to enhanced light-receiving efficiency and enhanced sensitivity of an image receiving system.

Light sources including the stimulating wavelength for the stimulable phosphor used in the radiation image conversion panel (23) are used as the stimulating light source (24). Specifically, the use of laser light simplifies an optical system and leads to enhanced stimulating light intensity, resulting in preferable performance. Examples of the laser include an He-Ne laser, He-Cd laser, Ar ion laser, Kr laser, N₂ laser, YAG laser and its second harmonic wave, ruby laser, semiconductor laser, various dye lasers, and metal vapor lasers such as a copper vapor laser. Of these, continuous oscillation lasers such as a He-Ne laser and an Ar ion laser are usually desirable, and pulse-oscillated lasers are also usable by synchronizing the pulse with a scanning time for one pixel of the panel. In cases when employing retarded emission for separation, instead of using the filter (28), the use of the pulse-oscillated laser is preferable rather than modulation of the continuous oscillation laser, as described in JP-A No. 59-22046. Of the various laser light sources described above, semiconductor lasers are specifically preferred in terms of being compact, inexpensive and not requiring a modulator.

The filter (28) cuts reflected stimulating light and allows the stimulated luminescence emitted from the radiation image conversion panel (23) to transmit, which is determined by the combination of the stimulated emission wavelength of a stimulable phosphor contained in the radiation image conversion panel (23) and the stimulating light source (24). In the preferred practical combination of a stimulating light wavelength of 500 to 900 nm with a stimulated emission wavelength of 300 to 500 nm, for example, violet to blue glass filters are used, such as C-39, C-40, V-40, V-42 and V-44 (available from TOSHIBA CORP.), 7-54 and 7-59 (available from Corning Co.), BG-1, BG-3, BG-25, BG-37 and BG-38 (available from Spectrofilm Co.). Interference filters are usable by selecting specific filters. The photoelectric conversion apparatus (25) usable in the invention includes any one capable of converting variation of luminous energy to electric signal, such as a photoelectric tube, a photomultiplier, a photodiode, a phototransistor, a solar cell, and photoconductive elements.

### EXAMPLES

The present invention will be further described based on examples but embodiments of the invention are by no means limited to these examples.

### Comparative example 1

### Preparation of Radiation Image Conversion Panel

On the surface of a 200 µm thick crystallized glass support (produced by Nippon Denki Glass Co., Ltd.) was formed a stimulable phosphor layer containing stimulable phosphor (CsBr:Eu) according to the condition shown in Table 1, using a vacuum evaporation apparatus as shown in Fig. 4.

In the vacuum evaporation, the support was set in the evaporation chamber of an evaporator and then, phosphor raw material, as an evaporation source (CsBr:Eu) which was previously molded in a press was put into a water-cooled crucible. Thereafter, the inside of the evaporator was evacuated and after introducing N₂ gas to adjust a degree of vacuum of 0.133 Pa, vacuum evaporation was conducted to perform vapor deposition, while maintaining the support temperature (also called substrate temperature) at 350° C. The vapor deposition was completed when the stimulable phosphor layer reached 300 µm thick and then, the phosphor layer was subjected to a heating treatment at 400° C. Peripheral portions of the support and a protective layer comprised of borosilicate glass were sealed with an adhesive in a dry aerial atmosphere to prepare a radiation image conversion panel sample No. 1, comprising tight-shielded a phosphor layer.

Radiation image conversion panel comparative samples No. 2 through 6 were prepared similarly to sample No. 1, provided that glass support (or substrate) was replaced by 200 µm thick support of polymer materials comprising a polyimide resin (Kapton, produced by Toray Co.) and an epoxy resin (produced by Nippon Ciba Geigy Co.), differing in compounding ratio and glass transition temperature (Tg) and an roof-form angle (i.e., angle = θ₁ + θ₂, as shown in Fig.4) was varied, as shown in Table 1.

Sample No. 7 was prepared similarly to sample No. 4, provided that the support was replaced by the three-layered support prepared as below. Thus, 2 mm thick carbon fiber plate (CFRP plate, available from Toray Co.) was sandwiched between polyimide sheets and molded at a pressure of 20 kg/cm² and a temperature of 200 °C for 15 min. Thereafter, cooling was gradually conducted until reached 100 °C and a three-layered support was obtained.

Comparative Sample No. 8 was prepared similarly to sample No. 4, provided that the support was replaced by the two-layered support prepared as below. An optimum amount of polyvinyl alcohol (M.W., 20,000) was put on a polyimide sheet and further thereon, the carbon fiber plate (CFRP plate, available from Toray Co.) was laminated at a temperature of 150 °C to obtain a two-layered support.

The carbon fiber plate (2 mm thick) described above exhibited a glass transition temperature of 180 °C and the polyimide sheet (Mictron film, available from Toray-Du Pont) being 100 thick and exhibiting a glass transition temperature of 280 °C.

In samples No. 2 through 8, supports (or substrates) were arranged as shown in Fig.4 and then, vapor evaporation was conducted. Thus prepared radiation image conversion panel samples were each evaluated with respect to sharpness, luminance and luminance distribution, according to the following procedure.

### Evaluation of Sharpness

Modulation transfer function (MTF) was determined for each of the radiation image conversion panel samples to evaluate sharpness. Thus, after a CTF chart was adhered to the respective radiation image conversion panels, each of the panels was exposed at 10 mR of 80 kVp X-rays (at a distance to the object: 1.5 m). Thereafter, sample were each scanned with a semiconductor laser light beam (690 nm, a power of 40 mW on the panel) of 100 µm diameter to read it. As shown in Table 1, MTF values (sharpness) of the respective panels were represented by the sum of the MTF values at 2.0 1p/mm. Evaluation of Luminance and Luminance Distribution

Samples were each evaluated with respect to luminance, using Regius 350, trade name, produced by Konica Corp. Thus, similarly to the foregoing sharpness evaluation, radiation image conversion panel samples were each exposed to X-rays of a tungsten bulb at 80 kVp and 10 mAs, at a distance between an X-ray source and the sample, and thereafter, the sample panel was set on the Regius 350 and read. Evaluation was made from electric signals obtained by a photomultiplier.

Distribution of electric signals within the exposed panel sample, obtained from the photomultiplier was evaluated. Thus, a standard deviation of the luminance distribution was determined for each panel sample (which was also denoted simply as S.D.). The less value indicates superior homogeneity of an activator.

**Table 1**

| Sample No. | Activator | Substrate | | Luminance | MTF (%) | S.D. (%) |
|---|---|---|---|---|---|---|
| | | Tg | Angle (θ₁ + θ₂) | | | |
| 1** | Eu* | - | - | 0.12 | 30 | 18 |
| 2** | Eu | 150 | 40° | 1.82 | 31 | 10 |
| 3** | Eu | 200 | 40° | 1.98 | 26 | 7 |
| 4** | Eu | 230 | 40° | 2.01 | 33 | 8 |
| 5** | Eu | 300 | 40° | 1.92 | 32 | 6 |
| 6** | Eu | 350 | 40° | 2.11 | 33 | 4 |
| 7 | Eu | 280 | 90° | 2.05 | 42 | 5 |
| 8** | Eu | 280 | 40° | 2.11 | 40 | 7 |

| | | | | | | |
|---|---|---|---|---|---|---|
| *: Activator (Eu) was introduced in the wet process **: Comparative examples | | | | | | |

As can be seen from Table 1, sample No. 7 was superior compared to samples No. 1 to 6 and 8.

## Claims

1. A radiation image conversion panel comprising on a support at least one stimulable phosphor layer comprising a stimulable phosphor,
wherein the stimulable phosphor layer is a layer of vapor-deposited stimulable phosphor having a thickness of 50 µm to 20 mm, and the support is comprised of polyimide, a carbon fiber plate, and polyimide in that order.

2. The radiation image conversion panel of claim 1, wherein the stimulable phosphor is represented by the following formula (1):
formula (1) M¹X·aM²X'·bM³X":eA
wherein M¹ is at least one alkali metal atom selected from the group consisting of Li, Na, K, Rb and Cs; M² is at least one divalent metal atom selected from the group consisting of Be, Mg, Ca, Sr, Ba, Zn, Cd, Cu and Ni; M³ is at least one trivalent metal atom selected from the group consisting of Sc, Y, La, Ce, Pr, Nd, Pm, Sm, Eu, Gd, Tb, Dy, Ho, Er, Tm, Yb, Lu, Al, Ga and In; X, X' and X" are each a halogen atom selected from the group consisting of F, Cl, Br and I; A is a metal atom selected from the group consisting of Eu, Tb, In, Ce, Tm, Dy, Pr, Ho, Nd, Yb, Er, Gd, Lu, Sm, Y, TI, Na, Ag, Cu and Mg; a, b and e are each 0 ≤ a < 0.5, 0 ≤ b < 0.5 and 0 < e ≤ 0.2.

3. The radiation image conversion panel of claim 2, wherein in the formula (1), M¹ is at least one alkali metal atom selected from the group consisting of Rb and Cs.

4. The radiation image conversion panel of claim 1 or 2, wherein in the formula (1), M² is at least one divalent metal atom selected from the group consisting of Be, Mg, Ca, Sr and Ba.

5. The radiation image conversion panel of claim 2, 3 or 4, wherein in the formula (1), M³ is at least one trivalent metal atom selected from Y, La, Ce, Sm, Eu, Gd, Al, Ga and In.

6. The radiation image conversion panel of claim 2, 3, 4 or 5, wherein in the formula (1), X is a halogen atom selected from the group consisting of F, Cl and Br.

7. The radiation image conversion panel of claim 1, 2, 3, 4, 5 or 6 wherein the stimulable phosphor is represented by the following formula (2):
formula (2) M¹X:eA
wherein M¹, X, A and e are each the same as defined in formula (1).

8. The radiation image conversion panel of any of claim 1 to 7, wherein the polymer material exhibits a glass transition temperature of 150 to 350 °C.

9. The radiation image conversion panel of any of claims 1 to 8, wherein the polymer material is at least one selected from the group consisting of a cellulose acetate resin, polyester resin, polyethylene terephthalate resin, polyamide resin, epoxy resin, polyimide resin, triacetate resin, polycarbonate resin and syndiotactic polystyrene resin.

10. The radiation image conversion panel of any of claims 1 to 9, wherein the support has a thickness of 80 to 2000 µm.

11. A method of preparing a radiation image conversion panel comprising on a support a stimulable phosphor layer, the method comprising:
depositing a stimulable phosphor on the support by vapor deposition to form the stimulable phosphor layer, wherein the support is comprised of polyimide, a carbon fiber plate, and polyimide in that order.

12. The method of claim 11, wherein the stimulable phosphor layer has a thickness of 50 µm to 20 mm.

13. The method of claim 11 or 12, wherein the stimulable phosphor is represented by the following formula (1):
formula (1) M¹X .aM²X' .bM³X" :eA
wherein M¹ is at least one alkali metal atom selected from the group consisting of Li, Na, K, Rb and Cs; M² is at least one divalent metal atom selected from the group consisting of Be, Mg, Ca, Sr, Ba, Zn, Cd, Cu and Ni; M³ is at least one trivalent metal atom selected from the group consisting of Sc, Y, La, Ce, Pr, Nd, Pm, Sm, Eu, Gd, Tb, Dy, Ho, Er, Tm, Yb, Lu, Al, Ga and In; X, X' and X" are each a halogen atom selected from the group consisting of F, Cl, Br and I; A is a metal atom selected from the group consisting of Eu, Tb, In, Ce, Tm, Dy, Pr, Ho, Nd, Yb, Er, Gd, Lu, Sm, Y, TI, Na, Ag, Cu and Mg; a, b and e are each 0 ≤ a < 0.5, 0 ≤ b < 0.5 and 0 < e ≤ 0.2.

14. The method of claim 11, 12 or 13, wherein the stimulable phosphor is represented by the following formula (2):
formula (2) M¹X:eA
wherein M¹, X, A and e are each the same as defined in formula (1).

15. The method of claim 11, 12, 13 or 14, wherein the polymer material exhibits a glass transition temperature of 150 to 350 °C.

16. The method of any of claims 1 1 to 15, wherein the polymer material is at least one selected from the group consisting of a cellulose acetate resin, polyester resin, polyethylene terephthalate resin, polyamide resin, epoxy resin, polyimide resin, triacetate resin, polycarbonate resin and syndiotactic polystyrene resin.

17. The method of any of claims 11 to 16, wherein the support has a thickness of 80 to 2000 µm.

## Patentansprüche

1. Ein Strahlungsbildwandler, umfassend auf einem Träger mindestens eine stimulierbare Phosphorschicht, umfassend einen stimulierbaren Phosphor, worin die stimulierbare Phosphorschicht eine Schicht von aus der Gasphase abgeschiedenem stimulierbaren Phosphor mit einer Dicke von 50 *µ*m bis 20 mm ist und der Träger aus Polyimid, einer Kohlenstofffaserplatte und Polyimid in dieser Reihenfolge besteht.

2. Der Strahlungsbildwandler nach Anspruch 1 , worin der stimulierbare Phosphor durch die folgende Formel (1) dargestellt wird:
Formel (1) M¹X•aM²X'•bM3X":eA
worin M¹ mindestens ein Alkalimetallatom, ausgewählt aus der Gruppe, bestehend aus Li, Na, K, Rb und Cs, ist; M² mindestens ein divalentes Metallatom, ausgewählt aus der Gruppe, bestehend aus Be, Mg, Ca, Sr, Ba, Zn, Cd, Cu und Ni, ist; M³ mindestens ein trivalentes Metallatom, ausgewählt aus der Gruppe, bestehend aus Sc, Y, La, Ce, Pr, Nd, Pm, Sm, Eu, Gd, Tb, Dy, Ho, Er, Tm, Yb, Lu, Al, Ga und In, ist; X, X' und X" jeweils ein Halogenatom, ausgewählt aus der Gruppe, bestehend aus F, Cl, Br und 1, sind; A ein Metallatom, ausgewählt aus der Gruppe, bestehend aus Eu, Tb, In, Ce, Tm, Dy, Pr, Ho, Nd, Yb, Er, Gd, Lu, Sm, Y, TI, Na, Ag, Cu und Mg, ist; a, b und e jeweils 0 ≤ a < 0,5, 0 ≤ b< 0,5 und 0 < e ≤ 0,2 sind.

3. Der Strahlungsbildwandler nach Anspruch 2, worin in der Formel (1) M¹ mindestens ein Alkalimetallatom, ausgewählt aus der Gruppe, bestehend aus Rb und Cs, ist.

4. Der Strahlungsbildwandler nach Anspruch 1 oder 2, worin in der Formel (1) M² mindestens ein divalentes Metallatom, ausgewählt aus der Gruppe, bestehend aus Be, Mg, Ca, Sr und Ba, ist.

5. Der Strahlungsbildwandler nach Anspruch 2, 3 oder 4, worin in der Formel (1) M³ mindestens ein trivalentes Metallatom, ausgewählt aus Y, La, Ce, Sm, Eu, Gd, Al, Ga und In, ist.

6. Der Strahlungsbildwandler nach Anspruch 2, 3, 4 oder 5, worin in der Formel (1) X ein Halogenatom, ausgewählt aus der Gruppe, bestehend aus F, Cl und Br, ist.

7. Der Strahlungsbildwandler nach Anspruch 1, 2, 3, 4, 5 oder 6, worin der stimulierbare Phosphor durch die folgende Formel (2) dargestellt wird:
Formel (2) M¹X:eA
worin M¹, X, A und e so wie jeweils in Formel (1) definiert sind.

8. Der Strahlungsbildwandler nach einem der Ansprüche 1 bis 7, worin das Polymermaterials eine Glasübergangstemperatur von 150 bis 350 °C aufweist.

9. Der Strahlungsbildwandler nach einem der Ansprüche 1 bis 8, worin das Polymermaterial mindestens eines ist, welches ausgewählt ist aus der Gruppe, bestehend aus einem Celluloseacetat-Harz, einem PolyesterHarz, einem Polyethylenterephthalat-Harz, einem Polyamid-Harz, einem Epoxy-Harz, einem Polyimid-Harz, einem Triacetat-Harz, einem Polycarbonat-Harz und einem syndiotaktischen Polystyrol-Harz.

10. Der Strahlungsbildwandler nach einem der Ansprüche 1 bis 9, worin der Träger eine Dicke von 80 bis 2000 µm aufweist.

11. Ein Verfahren zum Herstellen eines Strahlungsbildwandlers, umfassend auf einem Träger eine stimulierbare Phosphorschicht, wobei das Verfahren umfasst:
Abscheiden eines stimulierbaren Phosphors auf dem Träger durch Gasphasenabscheidung, um die stimulierbare Phosphorschicht zu bilden, worin der Träger aus Polyimid, einer Kohlenstofffaserplatte und Polyimid in dieser Reihenfolge besteht.

12. Das Verfahren nach Anspruch 11, worin die stimulierbare Phosphorschicht eine Dicke von 50 µm bis 20 mm aufweist.

13. Das Verfahren nach Anspruch 11 oder 12, worin der stimulierbare Phosphor durch die folgende Formel (1) dargestellt wird:
Formel (1) M¹X • aM²X' • bM³X":eA
worin M¹ mindestens ein Alkalimetallatom, ausgewählt aus der Gruppe, bestehend aus Li, Na, K, Rb und Cs, ist; M² mindestens ein divalentes Metallatom, ausgewählt aus der Gruppe, bestehend aus Be, Mg, Ca, Sr, Ba, Zn, Cd, Cu und Ni, ist; M³ mindestens ein trivalentes Metallatom, ausgewählt aus der Gruppe, bestehend aus Sc, Y, La, Ce, Pr, Nd, Pm, Sm, Eu, Gd, Tb, Dy, Ho, Er, Tm, Yb, Lu, Al, Ga und In, ist; X, X' und X" jeweils ein Halogenatom, ausgewählt aus der Gruppe, bestehend aus F, Cl, Br und 1, sind; A ein Metallatom, ausgewählt aus der Gruppe, bestehend aus Eu, Tb, In, Ce, Tm, Dy, Pr, Ho, Nd, Yb, Er, Gd, Lu, Sm, Y, TI, Na, Ag, Cu und Mg, ist; a, b und e jeweils 0 ≤ a < 0,5, 0 ≤ b < 0,5 und 0 < e ≤ 0,2 sind.

14. Das Verfahren nach Anspruch 11, 12 oder 13, worin der stimulierbare Phosphor durch die folgende Formel (2) dargestellt wird:
Formel (2) M¹X:eA
worin M¹, X, A und e so wie jeweils in Formel (1) definiert sind.

15. Das Verfahren nach Anspruch 11, 12, 13 oder 14, worin das Polymermaterial eine Glasübergangstemperatur von 150 bis 350 °C aufweist.

16. Das Verfahren nach einem der Ansprüche 1 1 bis 15, worin das Polymermaterial mindestens eines ist, welches ausgewählt ist aus der Gruppe, bestehend aus einem Celluloseacetat-Harz, einem PolyesterHarz, einem Polyethylenterephthalat-Harz, einem Polyamid-Harz, einem Epoxy=Harz, einem Polyimid-Harz, einem Triacetat-Harz, einem Polycarbonat-Harz und einem syndiotaktischen Polystyrol-Harz.

17. Das Verfahren nach einem der Ansprüche 1 1 bis 16, worin der Träger eine Dicke von 80 bis 2000 *µ*m aufweist.

## Revendications

1. Panneau pour la conversion d'images radiologiques comprenant sur un support au moins une couche de phosphore stimulable comprenant un phosphore stimulable, dans lequel la couche de phosphore stimulable est une couche de phosphore stimulable déposée en phase vapeur ayant une épaisseur de 50 µm à 20 mm, et le support est composé de polyimide, d'une plaque en fibre de carbone et de polyimide dans cet ordre.

2. Panneau pour la conversion d'images radiologiques selon la revendication 1, dans lequel le phosphore stimulable est représenté par la formule (1) suivante :
formule (1) m¹X·aM²X'·BM³X":eA
dans laquelle M¹ est au moins un atome de métal alcalin choisi dans le groupe constitué par Li, Na, K, Rb et Cs ; M² est au moins un atome de métal bivalent choisi dans le groupe constitué par Be, Mg, Ca, Sr, Ba, Zn, Cd, Cu et Ni ; M³ est au moins un atome de métal trivalent choisi dans le groupe constitué par Sc, Y, La, Ce, Pr, Nd, Pm, Sm, Eu, Gd, Tb, Dy, Ho, Er, Tm, Yb, Lu, Al, Ga et In ; X, X' et X" sont chacun un atome d'halogène choisi dans le groupe constitué par F, Cl, Br et I ; A est un atome de métal choisi dans le groupe constitué par Eu, Tb, In, Ce, Tm, Dy, Pr, Ho, Nd, Yb, Er, Gd, Lu, Sm, Y, Tl, Na, Ag, Cu et Mg ; a, b et e sont chacun 0 ≤ a < 0,5, 0 ≤ b < 0,5 et 0 < e ≤ 0,2.

3. Panneau pour la conversion d'images radiologiques selon la revendication 2, dans lequel dans la formule (1), M¹ est au moins un atome de métal alcalin choisi dans le groupe constitué par Rb et Cs.

4. Panneau pour la conversion d'images radiologiques selon la revendication 1 ou 2, dans lequel dans la formule (1), M² est au moins un atome de métal bivalent choisi dans le groupe constitué par Be, Mg, Ca, Sr et Ba.

5. Panneau pour la conversion d'images radiologiques selon la revendication 2, 3 ou 4, dans lequel dans la formule (1), M³ est un moins un atome de métal trivalent choisi parmi Y, La, Ce, Sm, Eu, Gd, Al, Ga et In.

6. Panneau pour la conversion d'images radiologiques selon la revendication 2, 3, 4 ou 5, dans lequel dans la formule (1), X est un atome d'halogène choisi dans le groupe constitué par F, Cl et Br.

7. Panneau pour la conversion d'images radiologiques selon la revendication 1, 2, 3, 4, 5 ou 6, dans lequel le phosphore stimulable est représenté par la formule (2) suivante :
formule (2) M¹X:eA
dans laquelle M¹, X, A et e sont chacun tels que définis dans la formule (1).

8. Panneau pour la conversion d'images radiologiques selon l'une quelconque des revendications 1 à 7, dans lequel le matériau polymère présente une température de transition vitreuse de 150 à 350°C.

9. Panneau pour la conversion d'images radiologiques selon l'une quelconque des revendications 1 à 8, dans lequel le matériau polymère est au moins un choisi dans le groupe constitué par une résine acétate de cellulose, une résine polyester, une résine téréphtalate de polyéthylène, une résine polyamide, une résine époxy, une résine polyimide, une résine triacétate, une résine polycarbonate et une résine polystyrène syndiotactique.

10. Panneau pour la conversion d'images radiologiques selon l'une quelconque des revendications 1 à 9, dans lequel le support a une épaisseur de 80 à 2000 µm.

11. Procédé de préparation d'un panneau pour la conversion d'images radiologiques comprenant sur un support une couche de phosphore stimulable, le procédé comprenant : le dépôt d'un phosphore stimulable sur le support par dépôt en phase vapeur pour former la couche de phosphore stimulable, dans lequel le support est composé de polyimide, d'une plaque en fibre de carbone et de polyimide dans cet ordre.

12. Procédé selon la revendication 11, dans lequel la couche de phosphore stimulable a une épaisseur de 50 µm à 20 mm.

13. Procédé selon la revendication 11 ou 12, dans lequel le phosphore stimulable est représenté par la formule (1) suivante :
formule (1) M¹X·aM²X'·bM³X" : eA
dans laquelle M¹ est au moins un atome de métal alcalin choisi dans le groupe constitué par Li, Na, K, Rb et Cs ; M² est au moins un atome de métal bivalent choisi dans le groupe constitué par Be, Mg, Ca, Sr, Ba, Zn, Cd, Cu et Ni ; M³ est au moins un atome de métal trivalent choisi dans le groupe constitué par Sc, Y, La, Ce, Pr, Nd, Pm, Sm, Eu, Gd, Tb, Dy, Ho, Er, Tm, Yb, Lu, Al, Ga et In ; X, X' et X" sont chacun un atome d'halogène choisi dans le groupe constitué par F, Cl, Br et I ; A est un atome de métal choisi dans le groupe constitué par Eu, Tb, In, Ce, Tm, Dy, Pr, Ho, Nd, Yb, Er, Gd, Lu, Sm, Y, Tl, Na, Ag, Cu et Mg ; a, b et e sont chacun 0 ≤ a < 0,5, 0 ≤ b < 0,5 et 0 < e ≤ 0,2.

14. Procédé selon la revendication 11, 12 ou 13, dans lequel le phosphore stimulable est représenté par la formule (2) suivante :
formule (2) M¹X:eA
dans laquelle M¹, X, A et e sont chacun tels que définis dans la formule (1).

15. Procédé selon la revendication 11, 12, 13 ou 14, dans lequel le matériau polymère présente une température de transition vitreuse de 150 à 350°C.

16. Procédé de l'une quelconque des revendications 11 à 15, dans lequel le matériau polymère est au moins un choisi dans le groupe constitué par une résine acétate de cellulose, une résine polyester, une résine téréphtalate de polyéthylène, une résine polyamide, une résine époxy, une résine polyimide, une résine triacétate, une résine polycarbonate et une résine polystyrène syndiotactique.

17. Procédé de l'une quelconque des revendications 11 à 16, dans lequel le support a une épaisseur de 80 à 2000 µm.
